# EUROPEAN PATENT APPLICATION

(11) **EP 4 509 827 A2**
(43) Date of publication of application: **19.02.2025**
(21) Application number: 24212088.9
(22) Date of filing: 08.04.2022
(51) Int. Cl.: G01N 27/87

(54) **METHOD OF AND SYSTEM FOR DETECTING AND/OR MONITORING THE GROWTH OF DEFECTS**

(30) Priority: 09.04.2021 EP 21167728
(62) Divisional of application: 22722174.4
(71) Applicant: Villari Holding B.V., 2629 JD Delft (NL)
(72) Inventor: BAAS, Olivier Constant Orestes, 2629 JD Delft (NL)
(74) Representative: De Vries & Metman

(57) **Abstract**

The invention relates to a method of detecting and/or monitoring the forming and/or the growth of defects, in particular cracks (12) or plastic deformation, and/or suspected defects in ferromagnetic structures (11), such as civil engineering and marine structures, comprising reading, at a first point in time, values of magnetic flux leakage (MFL) from a plurality of magnetometers (4) placed over or near a defect (12) or a suspected defect and storing the values of magnetic flux leakage (MFL). The method further comprises reading values of magnetic flux leakage (MFL) from a plurality of magnetometers (4) at a further point in time, processing the values of the further reading with the values from the earlier reading, and determining the location of a singular point (13) of the defect (12) from the processed further reading.

## Description

The invention relates to a method of and a system for detecting and/or monitoring the forming and/or the growth of defects, in particular cracks or plastic deformation, and/or suspected defects in ferromagnetic structures, such as civil engineering and marine structures, comprising reading values of magnetic flux leakage (MFL) from a plurality of magnetometers, placed over or near a defect or a suspected defect, and storing the values of magnetic flux leakage (MFL), typically in a memory that is part of and/or accessible via a controller or computer.

Non-destructive evaluation (NDE) is widely used to inspect objects, such as ships, offshore structures, renewable energy devices, e.g. windmills, bridges, buildings, cranes, railway, cars, machinery, and pipelines, for defects and damage due to corrosion and wear. Defects include cracks, inclusions, lack of fusion, incomplete penetration and porosities. One of the NDE methods is based on the so-called magnetic flux leakage (MFL) in the vicinity of a defect.

A well-known method that is based on MFL is magnetic particle inspection (MPI) for the detection of defects. This method, however, needs the presence and subjective judgment of a surveyor. Therefore, it is preferred to carry out MFL measurements using magnetometers, such as those based on the Hall effect.

As explained in Van der Horst, M. (2018), "On self magnetic flux leakage [SMFL] in support of fatigue crack monitoring in ship and offshore structures: A numerical, experimental, and full-scale application study.", regular inspection is needed in order to confirm adequate structural integrity throughout the entire service life of a structure. Detected fatigue cracks that are too long for safe operation need to be repaired. Detected cracks of acceptable length need to be at least inspected more frequently. These inspections are costly, time consuming, and hazardous, so additional inspections on top of the periodical regulatory surveys are to be avoided if possible.

In Van der Horst, it is mentioned that "The envisaged crack monitoring system would consist of arrays of Hall effect sensors that are placed on detected cracks, so that their propagation can be monitored without additional inspections. The Hall effect sensors need to be placed at an optimal altitude above the metal surface, balancing between the sensor sensitivity and accompanied costs, and the spatial density of sensors required for accurate crack length characterization. In principle, a crack can be monitored as long as it is underneath the sensor array. However, crack length dependency of the SMFL creates opportunities to estimate the crack length even when it has propagated outside the sensor array."

It is an object of the present invention to provide an improved method of and system for detection and/or growth monitoring of defects.

To this end, the method according to the invention is characterized by reading values of magnetic flux leakage (MFL) from a plurality of magnetometers at a further (later) point in time,
processing the values of the further reading with the values from the earlier reading, and
determining the location of a singular point of the defect from the processed further reading.

The reading of values, e.g. a current or most recent reading, typically contains little or insufficient information at least in that it does not provide an accurate location of a singular point, such as the tip of a crack, at which the defect propagates or forms. It was found that processing the values of MFL of a current reading with the values of MFL of an earlier reading, such as an initial or reference reading or the preceding reading, significantly improves the accuracy of the data relating to the location of a singular point, in particular the tip of the crack, in the current reading and in many cases even enables locating the singular point where this was impossible with existing methods.

Defects can be surface breaking defects, also known as surface defects or surface flaws, and/or non-surface breaking defects, also known as subsurface defects or embedded flaws. Examples of defects include cracks, plastic deformation (which often is an indication or a precursor of a crack), corrosion, and pitting. Suspected defects include indications that a defect is present and include likely or expected defects, such as critical locations in structures that could contain a defect or where a defect is likely to form or originate.

To enable a more accurate distinction between global effects, such as changes in temperature, expansion of materials, and variations in magnetic (background) field, on the one hand and local (smaller) changes, such as defect growth, on the other, it is preferred that the system comprises at least 3 magnetometers, preferably at least 5 magnetometers, preferably at least 10 magnetometers, preferably at least 20 magnetometers, and/or that the magnetometers are arranged in an array (two dimensions) or in a (single) line (one dimension parallel to the surface on which the magnetometers are placed), in particular a straight line and/or that the distance between most, preferably all, of the magnetometers is equal.

The frequency of the reading of values depends on the circumstances, e.g. the expected rate of propagation or the nature of the structure, i.e. a higher expected rate and more critical structures could necessitate more frequent readings. In general, more frequent readings, e.g. one or more readings per day or per hour, generate more data and are generally preferred. As batteries improve, a higher frequencies will be simpler to implement. With low expected rates and/or non-critical structures readings can be less frequent, e.g. weekly, monthly, or even quarterly.

As mentioned, the magnetometers are placed over the (suspected) defect or near the (suspected) defect, e.g. less than 200 mm, preferably less than 100 mm, preferably less than 50, e.g. within 10 mm from the (suspected) defect.

In an embodiment, the values comprise data of MFL in two or more directions, preferably at least in a direction along the defect (provided of course that the direction can be determined) and in a direction perpendicular to the surface of the ferromagnetic structure on which the magnetometers are placed.

In an embodiment, the method comprises the steps of comparing sets of values of MFL in different directions, selecting at least one set, and determining the location of a singular point of the (suspected) defect from the selected set.

If values are read in two or more, e.g. three directions, in case or surface breaking defects, such as cracks, preferably at least in a direction along the defect (Y-direction), perpendicular to the surface of the ferromagnetic structure (X-direction), and perpendicular to the other two (Z-direction), and processed, at least one signal, i.e. set of values read/measured with a plurality of magnetometers in a particular direction, e.g. along the defect, will typically provide a clearer change in sign, in particular from positive to negative, or direction (peak) than the other(s). This signal is then selected to determine the location of a singular point.

The combination of reading values in two or more, e.g. three directions, and arranging the magnetometers in a single dimension, such as a line, in particular a straight line, provides a relatively compact yet effective means for detecting and/or monitoring the forming and/or the growth of defects, in particular cracks or plastic deformation.

In an embodiment, the values of magnetic flux leakage (MFL) are read passively, in particular without actively generating a magnetic field and preferably by reading only permanent magnetisation, stress induced magnetisation (also known as the magnetoelastic or Villari effect) and/or the Earth magnetic field, which is/are naturally available as a source or origin of magnetism.

In an embodiment, processing the values of the further reading with the values from the earlier reading involves at least one of calculating, preferably for individual magnetometers, preferably for each of the magnetometers individually, a (weighted) moving average of readings at different points in time, a derivative, a difference, a (weighted) mean squared error, a (weighted) least squares error, zero-crossing or similar noise filtering, and signal reduction processing steps, of such readings.

In a preferred example, values from the earlier reading are subtracted from the values of the further reading.

The invention also relates to a system for detecting and/or monitoring the growth of defects, in particular cracks, in ferromagnetic structures, such as civil engineering and marine structures, comprising a plurality of magnetometers and means, such as a controller, for carrying out the method described above.

To enable a more accurate distinction between global effects, such as changes in temperature, expansion of materials, and variations in magnetic (background) field, on the one hand and local (smaller) changes, such as defect growth, on the other, it is preferred that the system comprises at least 3 magnetometers, at least 5 magnetometers, preferably at least 10 magnetometers, preferably at least 20 magnetometers, and/or wherein the magnetometers are arranged in an array or in a line, in particular a straight line, or in parallel (straight) lines and/or wherein the distance between most, preferably all, of the magnetometers is equal.

In principle all existing and future magnetometers are suitable. Examples include magnetometers configured to measure magnetism based on Hall effect, on anisotropic magnetoresistance (AMR), or on fluxgate. It is preferred that the magnetometers measure magnetism in at least two directions, preferably in three directions.

Another embodiment comprises a controller connected to the magnetometers and configured to turn the magnetometers on, i.e. activate the magnetometers, initiate the readings/measurements, and turn the magnetometers off, preferably periodically. In an embodiment, the system comprises a battery and/or an energy generating and/or harvesting device.

In an embodiment, the controller comprises a processor, a memory, e.g. an (E)EPROM on a printed circuit board, that is accessible via the controller.

In another embodiment, the system comprises a transmitter to send data read with the magnetometers to a receiver and wherein the transmitter preferably is based on the Global System for Mobile Communications (GSM), Long Range Low Power (LoRa), Wifi, and other Radio Frequency standards.

In an embodiment, the magnetometers are accommodated in a housing and/or embedded in a surrounding material, which housing and/or embedding is water and/or oil resistant or weather-, water- and/or oilproof. In an embodiment, the controller and/or the transmitter are accommodated in a separate housing, and the controller is connected to the magnetometers, wired or wirelessly.

In an embodiment, the sensor comprises an adhesive layer, e.g. in the form of adhesive tape or a coating, mechanical fasteners and/or one or more magnets to mount the sensor on a metal structure.

The invention also relates to a computer program comprising instructions to cause the system described above to execute the steps of the method described above and to a computer-readable medium having the computer program stored thereon.

US 2015/377012 relates to a methodology and system for anomaly recognition and tracking in a variety of components, such as tubular components. The technique comprises sensing for anomalies in the component, and storing detected anomalies in a storage medium. The detected anomalies are matched with stored digital descriptions of anomalies. The stored digital descriptions may comprise anomalies of similar types and/or anomalies previously detected on the specific component being tested. The detected anomalies are ranked according to similarities with respect to the stored digital descriptions.

US 2018/038833 concerns a method and a system to create and use pre-magnetized ferromagnetic structures, where magnetic field direction rotates with depth, and analyze the nature of defects in the structures.

US 2014/368191 discloses a device for discovering, identification and monitoring, of mechanical flaws in metallic structures, based on magneto-graphic/magnetic tomography technique to identify stress-related defects.

US 2017/176389 relates to a method for identifying and locating a defect in a metal rail, which method includes the steps of positioning a first magnetic sensor at a distance above a rail, the first magnetic sensor being configured to measure a magnetic field of the rail; advancing the sensor along a length of the rail; sampling magnetic field measurements; determining multiple magnetic field gradients over different pluralities of samples; identifying a defect in the rail based on a change in one or more of the magnetic field gradients; and determining a position of the defect at a particular distance from the magnetic sensor based on a degree of variation in the magnetic field gradients.

In US 2015/330946 defects in ferromagnetic materials are detected and characterized by analyzing the items' magnetic fields to find portions of the magnetic fields that differ in characteristic ways from residual magnetic fields generated by non-defective portions of the items. The portions of the magnetic fields that differ in the characteristic ways correspond to locations of the defects. The residual magnetic fields correspond to portions of the items distant from the defects. The defect characterization may include volume of material lost due to each defect and/or width and/or depth of each defect.

US 2017/108469 relates to a system and method using magnetic sensing to non-intrusively and non-destructively characterize ferromagnetic material within infrastructure. The system includes sensors for measuring magnetic field gradients from a standoff distance adjacent to ferromagnetic material. The method includes using the system to measure magnetic fields, determining magnetic field gradients measured by a sensor array, and comparing measured and modeled or historical magnetic field gradients at the same or similar positions to identify differences caused by a phenomenon in the ferromagnetic material, and, in a particular embodiment, to recognize defects and developing defects.

The invention will now be explained in more detail with reference to the Figures, which show preferred embodiments of the present invention.
Figure 1 schematically shows a system for detecting and/or monitoring the growth of defects in accordance with the present invention.
Figure 2 shows a specific example of a sensor strip for use in the system of Figure 1, comprising a plurality of magnetometers.
Figures 3 and 4 show the results of readings (Figure 3) of values of magnetic flux leakage (MFL) with a plurality of magnetometers and the results of processing the readings (Figure 4).

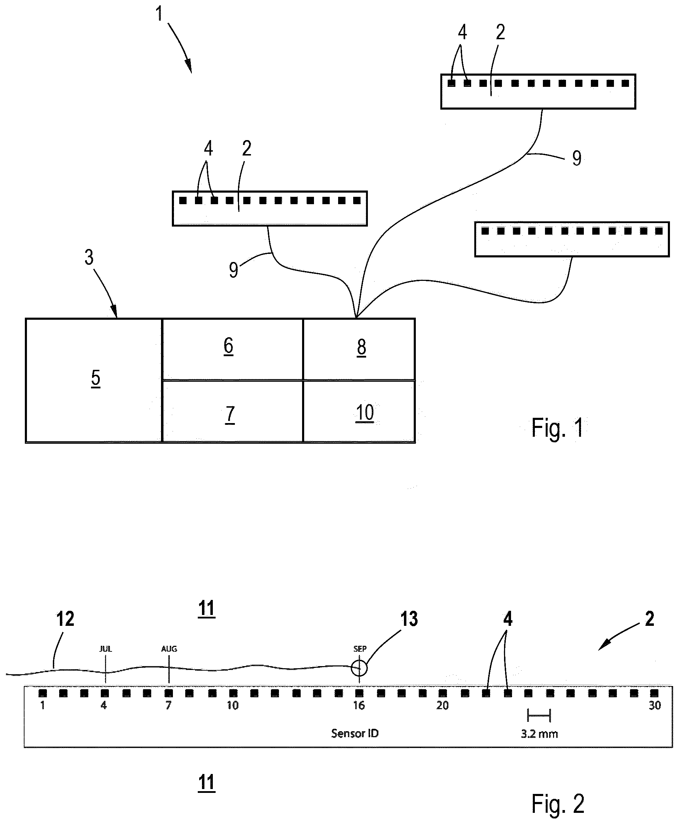

Figure 1 schematically shows a system 1 for detecting and monitoring the growth of defects in accordance with the present invention, comprising a plurality of sensor strips 2 to be placed over or near a (suspected) defect and a control unit 3 for operating and communicating with the sensor strips. Each strip comprises a plurality of triaxial Hall effect magnetometers 4, preferably at least 3, preferably arranged in a line, in particular a straight line, and has an adhesive surface to attach the strip to a steel structure, such as a civil engineering and marine structure.

In this example, the control unit 3 comprises a battery pack 5, a permanent magnet 6 to attach the control unit to the steel structure, a controller-board and processor 7, such as a plc, a microcontroller, or a single board computer, connector ports 8 for cables 9 connecting the sensor strips to the control unit, and a radio frequency (RF) module 10 to communicate with a central computer (not shown).

The controller is configured to turn the magnetometers on, i.e. activate the magnetometers, read values of magnetic flux leakage (MFL) from the plurality of magnetometers in three directions, and turn the magnetometers off. The transmitter is configured to send data read with the magnetometers to a receiver connected to the central computer, e.g. via GSM, LoRa, Wii, or another Radio Frequency standard.

Figure 2 shows a sensor 2 for carrying out MFL measurements, having 30 triaxial Hall effect magnetometers 4 arranged in a straight line at a consistent center to center separation of 3.2 mm. In Figure 2, the strip is adhered to a steel structure 11 alongside and essentially parallel to an existing surface breaking crack 12 having a clearly visible singular point, i.c. the tip 13 of the crack 12.

The sensor in Figure 2 was used to carry out a first reading of values of MFL in three directions, in this example

in the direction in which the crack extended and in the plane of the surface of the structure, in this context also referred to as the Y-direction,

in the direction perpendicular to the Y-direction and perpendicular to the surface of the structure, in this context also referred to as the Z-direction, and

in the direction perpendicular to the direction in which the crack extended and in the plane of the surface of the structure, in this context also referred as the X-direction.

In addition, the total field strength (scalar) at each magnetometer was calculated in the central computer from to the values measured in the three directions.

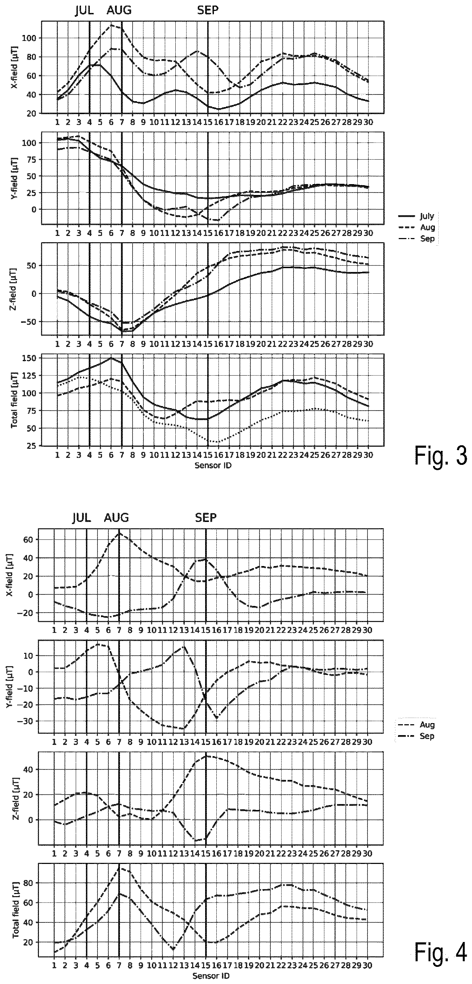

In this example, second and third readings were carried out one month later and two months later, respectively. The results of these readings are shown in Figure 3, where the first reading is marked "JUL", the second reading "AUG", and the third reading "SEP". In Figure 3, the locations of the actual tip of the crack at the times of the readings are marked with vertical lines.

The individual readings shown in Figure 3 contain no or at least insufficient information to accurately located of the tip of the crack.

Figure 4 shows values of magnetic flux leakage (MFL) from the second and third readings processed with the reading of the first and second readings, respectively. In this example, the values of the first reading were subtracted from the values of the second reading and the values of the second reading were subtracted from the values of the third reading.

The resulting curves of the processed values for MFL in the Y-direction, along the crack, change from a positive value to a negative value at sensors #7 (AUG) and #15 (SEP) and the resulting curves of the processed values for MFL in the X-direction each show a single, distinct peak at the same sensors, #7 (AUG) and #15 (SEP). The position of these sensors corresponded accurately to the actual location of the tip of the crack at the time of the second reading (AUG) and the third reading (SEP), respectively.

Benefits of defect detection and a defect monitoring system based on such measurements are e.g. that the risk level of measured objects can be assessed, that rational decision making on defect repair can be made, and that less frequent inspections can be made by surveyors what translates into less injuries/accidents, and/or significantly reduced costs.

The invention is not restricted to the embodiments described above and can be varied in numerous ways within the scope of the claims. For example, the sensor can be employed to detect new cracks, e.g. by placing sensors on locations where cracks are relatively likely to form.

The invention relates to a method as defined in the following clauses:
1. Method of detecting and/or monitoring the forming and/or the growth of defects, in particular cracks (12) or plastic deformation, and/or suspected defects in ferromagnetic structures (11), such as civil engineering and marine structures, comprising
   reading values of magnetic flux leakage (MFL) from a plurality of magnetometers (4), placed over or near a defect (12) or a suspected defect, at a first point in time, and
   storing the values of magnetic flux leakage (MFL), **characterised by**
   reading values of magnetic flux leakage (MFL) from a plurality of magnetometers (4) at a further point in time,
   processing the values of the further reading with the values from the earlier reading, and
   determining the location of a singular point (13) of the defect (12) from the processed further reading.
2. Method according to clause 1, wherein further readings are carried out at intervals short than one week, preferably one day or less than 24 hours.
3. Method according to clause 2, wherein the values comprise data of MFL in two or more directions and/or wherein the magnetometers (4) are arranged in an array or a line and/or wherein the distance between most, preferably all, of the magnetometers is equal.
4. Method according to clause 2 or 3, comprising the step of comparing the sets of values of MFL in different directions, selecting at least one set and determining the location of a singular point (13) of the defect (12) from the selected set.
5. Method according to any one of the preceding clauses, wherein values of magnetic flux leakage (MFL) are read passively.
6. Method according to any one of the preceding clauses, wherein processing the values of the further reading with the values from the earlier reading involves at least one of calculating a (weighted) moving average, a derivative, a difference, a (weighted) mean squared error, a (weighted) least squares error, zero-crossing or similar noise filtering and signal reduction processing steps.
7. Method according to any one of the preceding clauses, wherein values from the earlier reading are subtracted from the values of the further reading.
8. System (1) for detecting and/or monitoring the growth of defects, in particular cracks (12), in ferromagnetic structures (11), such as civil engineering and marine structures, comprising a plurality of magnetometers (4) and means, such as a controller (3), for carrying out the method of clause 1.
9. A computer program comprising instructions to execute the steps of the method of any one of the clauses 1 to 7.
10. A computer-readable medium having stored thereon the computer program of clause 8.

## Claims

1. System (1) for detecting and/or monitoring the growth of defects, in particular cracks (12) or plastic deformation and/or suspected cracks (12) or plastic deformation, in ferromagnetic structures (11), such as civil engineering and marine structures, comprising a plurality of magnetometers (4) and means, such as a controller (3), for
reading values of magnetic flux leakage (MFL) from a plurality of magnetometers (4), placed over or near a defect (12) or a suspected defect, at a first point in time, and
reading values of magnetic flux leakage (MFL) from a plurality of magnetometers (4) at a further point in time.

2. System (1) according to claim 1, comprising at least 3 magnetometers (4), at least 5 magnetometers, preferably at least 10 magnetometers, preferably at least 20 magnetometers, and/or wherein the magnetometers (4) are arranged in an array or a line, preferably a straight line, and/or wherein the distance between most, preferably all, of the magnetometers is equal.

3. System (1) according to claim 1 or 2, wherein the magnetometers (4) are configured to measure magnetism based on Hall effect, on anisotropic magnetoresistance (AMR), or on fluxgate, and/or in at least two directions, preferably in three directions.

4. System (1) according to any one of the preceding claims, comprising a controller (3) connected to the magnetometers (4) and configured to turn the magnetometers (4) on, initiate the readings, and turn the magnetometers (4) off, preferably periodically, and/or wherein the system (1) comprises a battery (5) and/or an energy generating and/or harvesting device.

5. System (1) according to any one of the preceding claims, comprising a transmitter (10) to send data read with the magnetometers (4) to a receiver and wherein the transmitter (10) preferably is based on the Global System for Mobile Communications (GSM), Long Range Low Power (LoRa), Wifi, and other Radio Frequency standards.

6. System (1) according to any one of the preceding claims, wherein the magnetometers (4) are accommodated in a housing (2) and/or embedded in a surrounding material, which housing and/or embedding is water and/or oil resistant or weather-, water- and/or oilproof.

7. System according to any one of the preceding claims, wherein the means, such as a controller, are configured to read the values of magnetic flux leakage (MFL) passively.

8. System according to claim 7, wherein the means are configured to read the values of magnetic flux leakage (MFL) by reading permanent magnetisation, stress induced magnetisation and/or the Earth magnetic field.

9. System according to any one of the preceding claims comprising a plurality of sensor strips (2) to be placed over or near a (suspected) defect.

10. System according to claim 9, comprising a control unit (3) for operating and communicating with the sensor strips (2).
10. System according to claim 8 or 9, wherein each strip comprises a plurality of triaxial Hall effect magnetometers (4), preferably at least 3, preferably arranged in a line, in particular a straight line.

11. System according to any of the preceding claims wherein the magnetometers comprise an adhesive layer, mechanical fasteners and/or one or more magnets to mount the magnetometers on a metal structure.

12. System according to any of the preceding claims, comprising a memory that is part of and/or accessible via the controller and/or a computer.

13. System according to any of the preceding claims, wherein the means, such as a controller, is configured to process the values of the further reading with the values from the earlier reading, and
determine the location of a singular point of the defect from the processed further reading.

14. System according to any of the preceding claims, which comprises a transmitter to send data read with the magnetometers to a receiver.

15. System according to claim 14, wherein the receiver is connected to a central computer that is configured to process the values of the further reading with the values from the earlier reading, and
determine the location of a singular point of the defect from the processed further reading.
